# FASCICULE DE BREVET EUROPEEN

(11) **EP 1 294 608 B1**
(45) Date de publication et mention de la délivrance du brevet: **12.05.2004**
(21) Numéro de dépôt: 00988894.2
(22) Date de dépôt: 07.12.2000
(51) Int. Cl.: B64B 1/70, B64B 1/60

(54) **BALLON DIRIGEABLE A PORTANCE VARIABLE**
LUFTSCHIFF MIT ÄNDERBARER TRAGKRAFT
DIRIGEABLE BALLOON WITH A VARIABLE LIFTING CAPACITY

(30) Priorité: 09.12.1999 FR 9915641
(43) Date de publication de la demande: 26.03.2003
(73) Titulaire: Aerospace Adour Technology, 64000 Pau (FR)
(72) Inventeur: SENEPART, Marc, F-65310 Laloubere (FR)
(74) Mandataire: David, Alain
(86) Numéro de dépôt international: PCT/FR2000/003431
(87) Numéro de publication internationale: WO 2001/042082

(56) Documents cités:
- FR-A- 2 320 229
- GB-A- 237 346
- GB-A- 1 348 408
- US-A- 1 729 925
- US-A- 1 797 502
- US-A- 2 180 036

## Description

La présente invention propose de munir un ballon dirigeable d'une enceinte à paroi souple renfermant de l'hélium portant le ballon et de moyens permettant de modifier le volume de l'enceinte souple.

Un tel ballon dirigeable est par exemple montré dans le document US-A-1 797 502.

La présente invention peut être appliquée à tout type de dispositif de portabilité variable utilisant une enceinte renfermant de l'hélium. L'hélium peut être remplacé par tout gaz plus léger que l'air tel que par exemple le méthane, l'éthane, l'hydrogène ou le néon.

La variation du volume doit s'effectuer sans frottement avec l'enceinte rigide extérieure du dirigeable qui compose sa forme aérodynamique tout en assurant la variation de portance et la transmission des efforts variables suivant l'assiette du vol qui est demandé à l'appareil. L'atterrissage, le décollage et la variation d'altitude sont alors très facilement obtenus à l'aide du dispositif nouveau décrit dans la présente invention.

Lorsque l'enceinte à paroi souple est complètement déployée, sa forme est sensiblement cylindrique. Lorsque les moyens permettant de modifier le volume de l'enceinte sont sollicités, la paroi souple peut prendre une forme repliée qui s'inscrit dans sa forme sensiblement cylindrique initiale.

La présente invention est définie de manière générale par un dispositif de portabilité variable comportant une structure et une enceinte interne renfermant un gaz plus léger que l'air par exemple de l'hélium portant ladite structure. Le dispositif est caractérisé par le fait que l'enceinte interne a une paroi souple et en ce que le dispositif comporte des moyens pour modifier le volume de l'enceinte interne.

Les moyens pour modifier le volume de l'enceinte interne comprennent un câble reliant la paroi souple à un treuil. Ledit câble peut être relié à la paroi souple au moyen d'au moins une poulie, ledit câble est lacé entre au moins une poutre fixée en partie haute de l'enceinte interne et une poutre fixée en partie basse de l'enceinte interne fixée sur une des poutres.

Selon un mode particulier de réalisation de l'invention, l'enceinte interne est pourvue en partie basse d'un ensemble de poulies et en partie haute de deux poutres munies d'un autre ensemble de poulies de façon à constituer un mouflage dudit câble.

Selon un mode particulier de réalisation de l'invention, les moyens pour modifier le volume de l'enceinte interne peuvent être disposés à l'intérieur de l'enceinte interne.

La structure du dispositif selon l'invention peut comporter un ballast comprenant au moins un compresseur et au moins un réservoir d'hélium communiquant avec l'enceinte interne au moyen d'au moins une vanne. Le ballast peut comporter deux réservoirs symétriques.

La structure du dispositif selon l'invention peut comprendre une enceinte externe contenant l'enceinte interne. Le volume compris entre l'enceinte interne et l'enceinte externe peut communiquer avec l'extérieur du ballon dirigeable au moyen d'au moins un orifice muni d'au moins un échangeur de chaleur. Un échangeur de chaleur peut utiliser comme source chaude les gaz d'échappement d'un moteur. Un échangeur de chaleur peut utiliser comme source froide l'eau résultant de phénomènes de condensation.

Le dispositif selon l'invention peut être utilisé dans un ballon dirigeable destiné au levage ou au transport de charges.

D'autres avantages et caractéristiques de l'invention ressortiront mieux à la lecture d'un mode de réalisation de l'invention illustré par les dessins annexés sur lesquels :
- la figure 1 représente une vue en coupe transversale d'un ballon dirigeable,
- la figure 2 représente les moyens permettant de modifier la géométrie de l'enceinte souple,
- la figure 3 schématise le principe des échanges gazeux dans le ballon dirigeable.

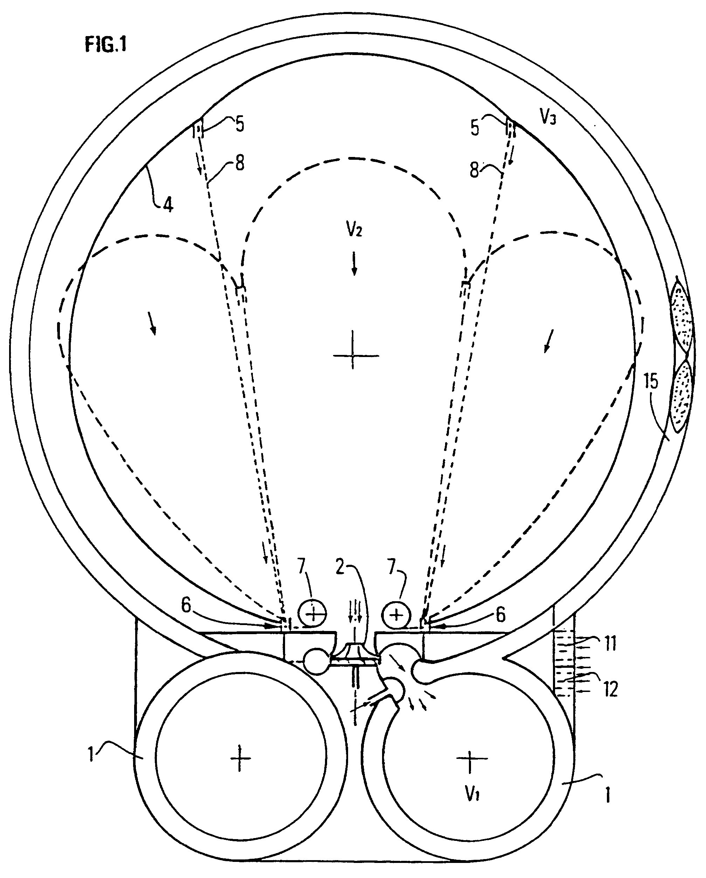

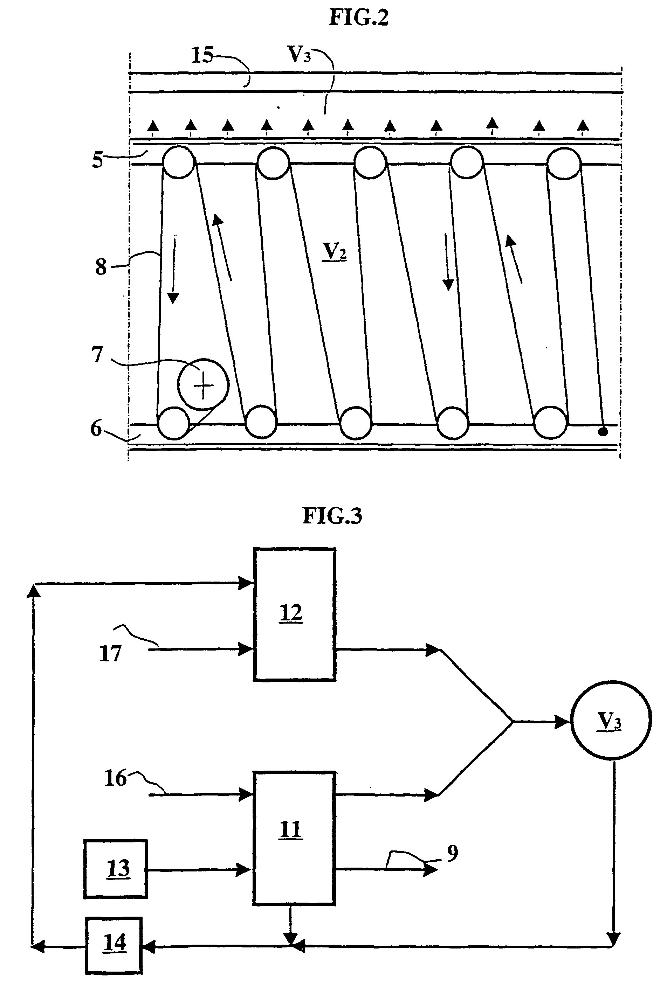

Le dispositif selon une réalisation de l'invention représentée sur la figure 1 comporte trois parties. La première partie est un ballast (1) de forme rigide en composite armé et constitue un réservoir de volume (V1) dans lequel on comprime le gaz hélium à l'aide d'un compresseur (2). La deuxième partie constitue une enceinte interne (4), à paroi souple en communication avec le réservoir, dans laquelle le gaz hélium pourra se détendre. Une vanne interposée entre l'enceinte interne (4) et le réservoir commande l'admission de l'hélium. L'enceinte interne (4) a une section en forme de cardioïde quand elle est déployée. Les deux arêtes de la cardioïde sont chacune reliées symétriquement à une poutre (5) qui porte une série de poulies (figure 2). En partie basse de l'enceinte interne (4), est disposée sur la première partie du dispositif une poutre (6) et un câble (8) lacé entre les poutres (5) et (6). L'une des extrémités du câble est relié à un treuil (7) permettant de réduire la longueur du câble et par l'action du mouflage, ainsi formé, de replier la partie haute de l'enceinte interne (4) en incurvant sa forme vers l'intérieur. En même temps le compresseur d'hélium (2) est mis en route pour refluer le gaz de l'enceinte (4) vers le ballast (1). Le volume (V2) de l'enceinte interne (4) diminuant; la portance du dirigeable décroît. Dans le cas contraire on lâche le gaz vers l'enceinte interne (4) en ouvrant la vanne (3) et:on laisse filer le câble proportionnellement à la détente du gaz. La pression dans l'enceinte interne (4) reste constante et la charge du dirigeable est transmise en permanence à la paroi souple par les deux poutres (5) et (6).

La troisième partie du dispositif est une enceinte externe (15) constituant l'habillage extérieur de la structure rigide du dirigeable. L'enceinte externe (15) est multi-lobée, et les lobes ainsi constitués sont comprimés par de l'hélium sous pression régulée. Cette disposition assure une pression constante dans les lobes constituant l'enceinte externe (15) et rigidifie la structure en assurant en même temps une bonne isolation de l'air contenue dans le volume compensatoire (V3), compris entre l'enceinte interne (4) et l'enceinte externe (15), soumis à des variations lors des manoeuvres du dirigeable. Cette disposition réduit considérablement les écarts de température avec l'environnement extérieur lors du vol et contribue au fonctionnement adiabatique (compression et détente) du gaz hélium dans l'enceinte interne (4).

Selon des modes particuliers de réalisation :
■ La paroi de l'enceinte interne (4) en forme de cardioïde peut être renforcée extérieurement par un filet qui transmet l'effort, la paroi assurant seule l'étanchéité au gaz et peut être composée de différentes couches de tissus ayant chacun ses caractéristiques propres, faible diffusion de l'hélium, isolation thermique, résistance au pliage et à la déchirure.
■ L'ensemble peut comporter plusieurs compartiments fonctionnant sous le même principe mais répartis longitudinalement à l'intérieur de l'enveloppe rigide du dirigeable.
■ L'enceinte interne (4) peut être reliée : à deux ballasts (1) symétriques, ce montage ayant pour avantage une meilleure répartition des efforts à l'équilibre et réduit le volume des ballasts tout en rigidifiant l'ensemble de la structure porteuse.
■ Les compresseurs peuvent se situer entre les ballasts ou à l'intérieur de ceux-ci selon une variante non illustrée sans que le principe de base en soit modifié.
■ Dans le montage de la figure 2 le treuil (7) est inclus à l'intérieur de l'enceinte interne (4) pour éviter au câble de franchir la peau au moyen d'un presse étoupe toujours difficile à réaliser. Néanmoins, d'autres dispositions sont possibles afin d'adapter le principe à la structure de l'appareil.
■ Dans la présente description (figure 1), les vannes interposées dans la veine d'hélium entre les ballasts et l'enceinte interne (4) sont réalisées par la striction du conduit sous pression entre la partie déformable et le conduit rigide qui alimente le ballast. Tout autre dispositif de vannes peut être employé sans que cela ne modifie le principe de base ainsi décrit.

L'espace compris entre les deux ballasts est mis à profit pour contenir les turbines entraînant les compresseurs multi-étages de l'hélium et de l'air de compensation dans le volume (V3) laissé libre entre l'enceinte variable et le volume intérieur de l'enveloppe rigide. Le diagramme de fonctionnement des échanges gazeux est donné à la figure 3. L'équilibre entre les parties du dispositif de l'invention est obtenu à partir d'une régulation très étroite des volumes (V1), (V2) et (V3) en pression et en température, dépendant des conditions du vol. Lors du refroidissement de l'air extérieur avec l'altitude, l'air d'équilibrage du volume compensatoire (V3) se réchauffe dans un échangeur de chaleur utilisant les gaz d'échappement des moteurs de traction du dirigeable comme source chaude. Cette opération s'effectue par l'intermédiaire des ouïes de la structure du dirigeable.

Une description des échanges gazeux sans que cela constitue une limitation au principe est décrit à la figure 3. Si la température extérieure de l'air s'abaisse bien en dessous de la température de consigne dans l'enceinte (V3), l'air (16) admis est réchauffé par l'échangeur (11) traversé par les gaz d'échappement produits par le moteur (13). Cette opération se solde par la condensation de l'eau résultant de la combustion des gaz d'échappement et celle-ci, récupérée, est stockée dans un réservoir (14). Les gaz résiduels (CO2) sont éliminés (9) à l'extérieur. L'eau résultant de la condensation de l'air contenu dans le volume (V3) est également recueillies et stockée dans le réservoir (14).

Cette opération se solde par plusieurs avantages :
■ Réchauffement de l'air de compensation et respect des conditions d'échanges thermiques dans la transformation polytropique du volume (V2) de l'enceinte interne (4). La température du gaz hélium varie peu.
■ Récupération de l'eau des condensats équilibrant la perte de poids en partie due à la consommation du carburant. Le bilan de masse de l'appareil est mieux conservé pendant la durée du vol.
■ Abaissement du bruit ambiant des moteurs puisque l'échappement des gaz s'effectue au travers des échangeurs.
■ Signature thermique pratiquement nulle de l'appareil : avantage incontestable pour les applications militaires.
■ Si la température extérieure augmente, l'air (17) admis est dirigé vers le deuxième échangeur (12) qui fonctionne comme évaporateur à partir de l'eau stockée dans le réservoir (14). L'air ainsi refroidi à l'intérieur de la structure contribue à maintenir les conditions idéales d'échanges propres de la transformation polytropique qui caractérise la modification du volume (V2) de l'enceinte interne (4) contenant de l'hélium et du volume (V3).

Le dispositif selon l'invention est particulièrement destiné à l'amélioration des performances des dirigeables conçus sous ce principe et à la déformabilité des enceintes d'hélium effectuant la variation dynamique de portance de l'appareil à toutes les allures du vol.

## Revendications

1. Dispositif de portabilité variable comportant :
- une structure comportant notamment une enceinte externe (15),
- une enceinte interne (4) ayant une paroi souple et renfermant un gaz plus léger que l'air par exemple de l'hélium portant ladite structure,
**caractérisé en ce que** pour modifier le volume de l'enceinte interne, il comporte au moins une poutre (5) fixée en partie haute de l'enceinte interne et au moins une poutre (6) fixée en partie basse de l'enceinte interne, un câble (8) étant lacé entre ces poutres (5) et (6) et au moins une extrémité de ce câble étant relié à un treuil (7).

2. Dispositif selon la revendication 1, **caractérisé en ce que** ledit câble (8) est relié à la paroi souple au moyen d'au moins une poulie fixée à chacune desdites poutres.

3. Dispositif selon la revendication 2, **caractérisé en ce que** l'enceinte interne est pourvue en partie basse de deux poutres (6) munies d'un ensemble de poulies et en partie haute de deux autres poutres (5) munies d'un autre ensemble de poulies de façon à constituer un mouflage dudit câble.

4. Dispositif selon la revendication 3, **caractérisé en ce que** l'enceinte interne a une section en forme de cardioïde une fois déployée.

5. Dispositif selon l'une quelconque des revendications précédentes, **caractérisé en ce qu'**il comporte plusieurs enceintes internes réparties longitudinalement à l'intérieur de ladite enceinte externe.

6. Dispositif selon l'une des revendications 2 à 5, **caractérisé en ce que** ledit treuil est disposé à l'intérieur de l'enceinte interne (4).

7. Dispositif selon l'une des revendications précédentes, **caractérisé en ce que** ladite structure comporte un ballast (1) comprenant au moins un compresseur (2) et au moins un réservoir d'hélium communiquant avec l'enceinte interne (4) au moyen d'au moins une vanne (3).

8. Dispositif selon la revendication 7, **caractérisé en ce que** le ballast (1) comprend deux réservoirs symétriques.

9. Dispositif selon l'une des revendications précédentes, **caractérisé en ce que** l'enceinte externe (15) contient l'enceinte interne (4) et **en ce que** le volume compris entre l'enceinte interne (4) et l'enceinte externe (5) communique avec l'extérieur de l'enceinte externe (15) au moyen d'au moins un orifice muni d'au moins un échangeur de chaleur (11-12).

10. Dispositif selon la revendication 9, **caractérisé en ce que** ledit échangeur de chaleur (11) utilise comme source chaude les gaz d'échappement d'un moteur.

11. Dispositif selon l'une des revendications 9 et 10, **caractérisé en ce que** ledit échangeur de chaleur (12) utilise comme source froide l'eau résultant de phénomènes de condensation.

12. Application du dispositif selon l'une des revendications précédentes à un ballon dirigeable destiné au levage ou au transport de charges.

## Claims

1. A variable-lift device comprising:
- a structure including in particular an external enclosure (15); and
- an internal enclosure (4) having a flexible wall and containing a gas that is lighter than air, e.g. helium carrying said structure;
the device being **characterised in that** in order to modify the volume of the internal enclosure, it includes at least one beam (5) fixed near the top of the internal enclosure and at least one beam (6) fixed near the bottom of the internal enclosure, with a cable (8) being threaded between such beams (5) and (6) and at least one end of said cable being connected to a winch (7).

2. A device according to claim 1, **characterised in that** said cable (8) is connected to the flexible wall by means of at least one pulley fixed to each one of said beams.

3. A device according to claim 2, **characterised in that** the internal enclosure is provided near its bottom with two beams (6) provided with a set of pulleys and near its top with two other beams (5) provided with another set of pulleys so as to co-operate with the cable to constitute a block-and-tackle.

4. A device according to claim 3, **characterised in that** the internal enclosure is of heart-shaped section when deployed.

5. A device according to any one of the preceding claims, **characterised in that** it includes a plurality of internal enclosures that are distributed longitudinally inside said external enclosure.

6. A device according to one of claims 2 to 5, **characterised in that** said winch is disposed inside the internal enclosure (4).

7. A device according to one of the preceding claims, **characterised in that** said structure includes a ballast tank (1) comprising at least one helium tank communicating with the internal enclosure (4) via at least one valve (3) and at least one compressor (2).

8. A device according to claim 7, **characterised in that** the ballast tank (1) comprises two symmetrical tanks.

9. A device according to one of the preceding claims, **characterised in that** the external enclosure (15) contains the internal enclosure (4), and **in that** the volume between the internal enclosure (4) and the external enclosure (15) communicates with the outside of the external enclosure (15) via at least one orifice fitted with at least one heat exchanger (11-12).

10. A device according to claim 9, **characterised in that** said heat exchanger (11) uses as a heat source the exhaust gases of an engine.

11. A device according to claim 9 or claim 10, **characterised in that** said heat exchanger (12) uses as a cold source the water that results from condensation phenomena.

12. The application of the device according to one of the preceding claims to a dirigible balloon for hoisting or transporting loads.

## Patentansprüche

1. Vorrichtung mit variabler Tragbarkeit, mit :
- einem Aufbau, der insbesondere einen externen Einschluss (15) umfasst,
- einem internen Einschluss (4), der eine biegsame Wandung hat und ein Gas einschließt, das leichter ist als Luft, zum Beispiel Helium, das diesen Aufbau trägt,
**dadurch gekennzeichnet, dass** sie zum Ändern des Volumens des internen Einschlusses mindestens einen Balken (5) umfasst, der im oberen Teil des inneren Einschlusses befestigt ist, und mindestens einen Balken (6), der im unteren Teil des inneren Einschlusses befestigt ist, wobei ein Kabel (8) zwischen diesen Balken (5) und (6) geschnürt ist und mindestens ein Ende dieses Kabels an einer Winde (7) befestigt ist.

2. Vorrichtung nach Anspruch 1, **dadurch gekennzeichnet, dass** das Kabel (8) mit der biegsamen Wandung mittels mindestens einer Scheibe verbunden ist, die an jedem der Balken befestigt ist.

3. Vorrichtung nach Anspruch 2, **dadurch gekennzeichnet, dass** der innere Einschluss im unteren Teil mit zwei Balken (6) versehen ist, die mit einer Einheit von Scheiben versehen sind, und im oberen Teil mit zwei weiteren Balken (5), die mit einer weiteren Einheit von Scheiben versehen sind, sodass ein Flaschenzug des Kabels gebildet ist.

4. Vorrichtung nach Anspruch 3, **dadurch gekennzeichnet, dass** der innere Einschluss einen Querschnitt in einmal aufgefalteter Herzform hat.

5. Vorrichtung nach einem der vorhergehenden Ansprüche, **dadurch gekennzeichnet, dass** sie mehrere innere Einschlüsse umfasst, die längs im Inneren des äußeren Einschlusses verteilt sind.

6. Vorrichtung nach einem der Ansprüche 2 bis 5, **dadurch gekennzeichnet, dass** die Winde im Inneren des inneren Einschlusses (4) angeordnet ist.

7. Vorrichtung nach einem der vorhergehenden Ansprüche, **dadurch gekennzeichnet, dass** der Aufbau einen Ballast (1) umfasst, der mindestens einen Verdichter (2) und mindestens einen Heliumtank umfasst, der mit dem inneren Einschluss (4) mittels mindestens eines Ventils (3) verbunden ist.

8. Vorrichtung nach Anspruch 7, **dadurch gekennzeichnet, dass** der Ballast (1) zwei symmetrische Tanks umfasst.

9. Vorrichtung nach einem der vorhergehenden Ansprüche, **dadurch gekennzeichnet, dass** der äußere Einschluss (15) den inneren Einschluss (4) enthält und dadurch, dass das Volumen zwischen dem inneren Einschluss (4) und dem äußeren Einschluss (15) mit der Außenseite des äußeren Einschlusses (15) mittels mindestens einer Öffnung verbunden ist, die mit mindestens einem Wärmeaustauscher (11-12) versehen ist.

10. Vorrichtung nach Anspruch 9, **dadurch gekennzeichnet, dass** der Wärmeaustauscher (11) die Abgase eines Motors als Hitzequelle verwendet.

11. Vorrichtung nach einem der Ansprüche 9 und 10, **dadurch gekennzeichnet, dass** der Wärmeaustauscher (12) das Wasser als Kältequelle verwendet, das sich aus Kondensationserscheinungen ergibt.

12. Anwendung der Vorrichtung nach einem der vorhergehenden Ansprüche auf einen Lenkballon, der zum Heben oder Transportieren von Lasten bestimmt ist.
